# EUROPEAN PATENT APPLICATION

(11) **EP 1 587 325 A2**
(43) Date of publication of application: **19.10.2005**
(21) Application number: 05300215.0
(22) Date of filing: 23.03.2005
(51) Int. Cl.: H04N 7/24

(54) **Method and device for handling metadata**

(30) Priority: 15.04.2004 EP 04008934
(71) Applicant: Thomson Licensing, 92100 Boulogne Billancourt (FR)
(72) Inventor: Li, Hui, 30419 Hannover (DE); Blawat, Meinolf, 30659 Hannover (DE); Klausberger, Wolfgang, 30519 Hannover (DE); Kubsch, Stefan, 31559 Hohnhorst (DE); Hepper, Dietmar, 30419 Hannover (DE)
(74) Representative: Rittner, Karsten

(57) **Abstract**

The handling of metadata being provided in different formats shall be simplified. Therefore, it is suggested to provide metadata in a first metadata structure having a first format and providing a second metadata structure having a second format, wherein link data are deposited in the second metadata structure (A1, A2). The link data (UUID) point to metadata in the first metadata structure. Thus, it is possible to realize synchronous and automatic editing of metadata and its mirror metadata.

## Description

### Field of the invention

The present invention relates to a method for handling metadata by providing metadata in a first metadata structure having a first format and providing a second metadata structure having a second format. Furthermore, the present invention relates to a corresponding device for handling metadata.

### Background

Usually, metadata are stored in a local database in an individual format. Based on these database metadata, essence may be found easily.

For data exchange among a plurality of applications the Material exchange Format (MXF) is developed in the Pro-MPEG Forum (www.pro-mpeg.org). The MXF data format has many advantages. An important advantage of the MXF is that it supports metadata functionality. This means that the MXF makes it possible to interchange or store essence user data together with their associated metadata.

When applying the MXF in a local computer system, metadata can exist both in a local metadata database and each MXF file. It is impossible to realize synchronously metadata editing for metadata in the local database and metadata in MXF files. Thus, the metadata provided in the two different formats have to be edited twice.

### Summary of the invention

In view of that it is the object of the present invention to provide a method and a device for handling metadata which ensure simplified editing of the metadata.

According to the present invention this object is solved by a method for handling metadata by providing metadata in a first metadata structure having a first format and providing a second metadata structure having a second format, and, furthermore, depositing link data in said second metadata structure, said link data pointing to said metadata in said first metadata structure.

Additionally, there is suggested a device for handling metadata including first data providing means for providing metadata in a first metadata structure having a first format and second data providing means for providing a second metadata structure having a second format, as well as data processing means for depositing link data in said second metadata structure, said link data pointing to said metadata in said first metadata structure.

The inventive method and device allow simply generating, editing and searching of metadata by including reference messages in corresponding metadata of different formats. Thus, synchronous and automatic editing of metadata and its mirror metadata can be realized.

Preferably, the link data include a universal unique identifier. This identifier points to specific metadata, so that data of different formats may have access to these metadata.

The first format may be the standardized MXF format and the link data in other metadata may point to the unique identifier and associated metadata of an MXF file. Thus, any metadata provided in the MXF format can be used for individual applications.

The second format may be a multi-layer-format as defined in document EP 1 387 295 A1. Such multi-layer-format provides a metadata link space for storing linking information pointing to a unique identifier and associated metadata of an MXF file.

Alternatively, the first format is a multi-layer-format and the link data in other metadata are pointing to an identifier element in the multi-layer-format. In that way, metadata of an individual multi-layer-format may be accessed to. If in this case the second format is the standardized MXF format, the link data may be stored in the associated metadata of an MXF file.

In principle, the inventive method for automatically handling metadata includes the steps of retrieving from a first storage medium first data comprising first metadata and having a first format, retrieving from the first or a different second storage medium second data having a second format, detecting that the retrieved first data have been modified, extracting link information from the first metadata, wherein the extracted link information is a reference to said second data such as a UUID, and updating the second data referenced by said link information with the modified first metadata.

Further, also the second data may contain link information comprising first link information being a reference to said first data and second link information being a reference to said first metadata within said first data, and the method may further comprise the steps of detecting, before updating the retrieved second data, that the retrieved second data have been modified, determining whether the first data or the second data have been modified later, and if the second data have been modified later, then extracting said link information from the second data, and updating the first metadata referenced by said link information.

### Brief description of the drawings

Exemplary embodiments of the invention are described with reference to the attached drawings showing in:
- Fig. 1: the over all data structure of a simple MXF file;
- Fig. 2: an over all data structure of an MXF file with optional components;
- Fig. 3: the data structure of an MXF file containing one essence container;
- Fig. 4: the data structure of an MXF file containing two essence containers;
- Fig. 5: a detailed structure of the metadata of an MXF file;
- Fig. 6: the data structure of metadata in a multi-layer-format; and
- Fig.7: the inventive linking concept between MXF metadata and metadata in multi-layer-format.

### Detailed description of the invention

The following description of exemplary embodiments of the inventive method is based on the MXF standard format and a multi-layer-format, but the method can also be used for data according to any other standard format. In order to better understand the present invention, first of all the following paragraphs demonstrate the handling of metadata in the MXF format and a multi-layer-format according to the prior art.

The Material exchange Format (MXF) is a joint effort between major industry organizations. It is an open and standardized format, a file wrapper format, independent from application, platform and network and a metadata aware file format. MXF is said to be the first standardized data format, which can pack essence with its associated metadata together. That is the very reason that many companies want to use this format.

When a user according to prior art transfers local essence into an MXF file, some database metadata associated to the essence will be packed together into the MXF file. The database metadata model or structure will be converted into an appropriate MXF metadata model. In this case, the MXF metadata is a kind of mirror metadata of the database metadata.

In another scenario, before the user stores a received MXF file into an own repository, the user may convert some significant MXF metadata into the model of local database metadata and load them into local database. In this case the database metadata is a kind of mirror of the MXF metadata.

Usually, when users edit any metadata (either in the MXF file or in the local database), it is desired that any associated mirror metadata (either in local database or in MXF file) can be edited synchronously or automatically. However, according to the prior art, this is impossible. The reason is, that after the metadata converting procedure (from database to MXF, or vice versa), there is no reference linking between the database metadata and the MXF metadata anymore. Thus, database metadata and MXF metadata can be only edited separately.

In order to enable editing of metadata and its mirror metadata synchronously or automatically, this invention provides a method to set up reference linking between database metadata and MXF metadata.

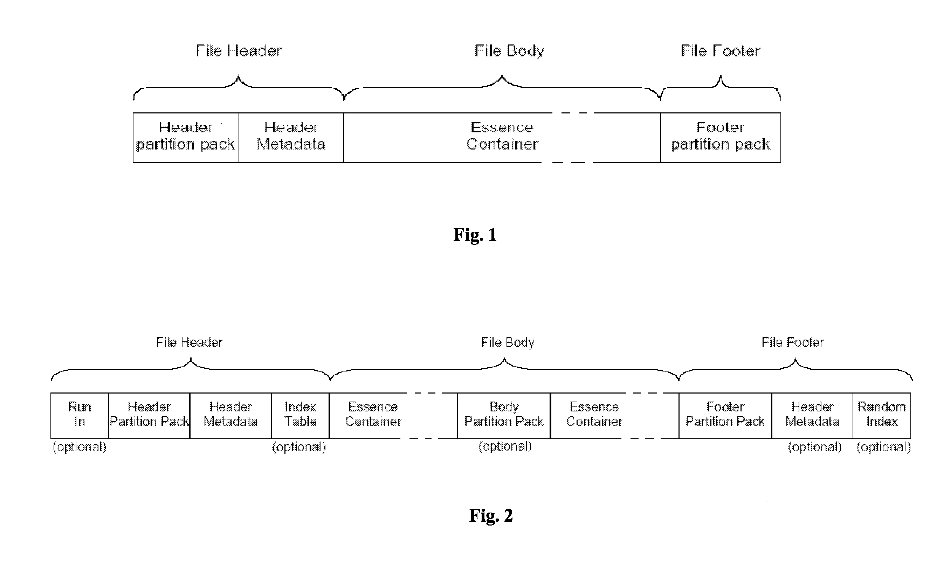

As shown in Figure 1 taken from the MXF standard like Figures 2 to 5, a simple MXF file normally includes a File Header, a File Body and a File Footer. The File Header is divided into a Header partition pack and a Header metadata pack. The File Body represents the Essence Container.

Figure 2 shows the overall data structure of an MXF file having some additional optional components compared to the simple MXF file of Figure 1. Specifically, the File Header includes an optional Run In block and an optional Index Table. Furthermore, the File Body may include a Body Partition Pack and the File Footer may include a Header Metadata Pack and a Random Index Pack.

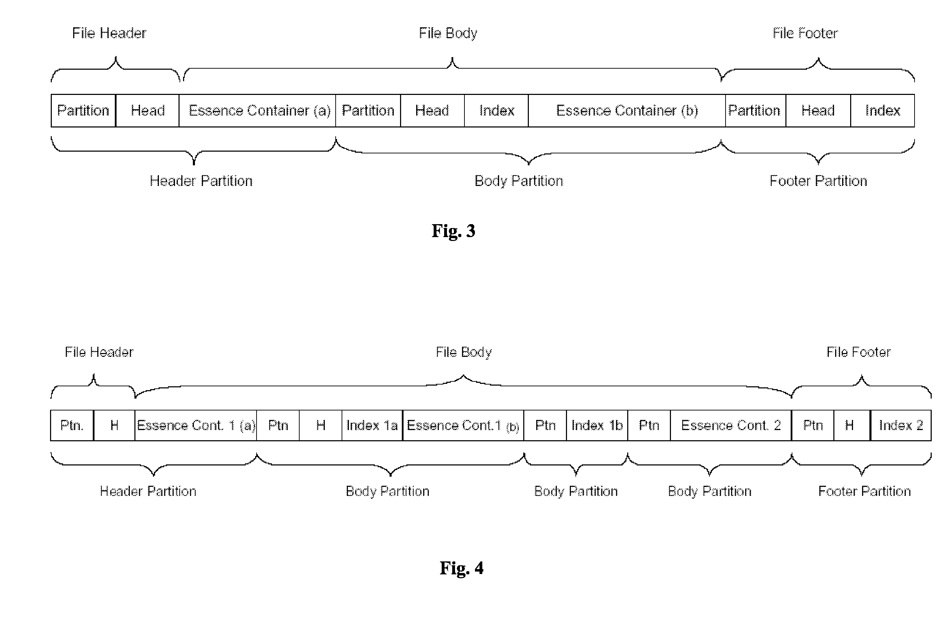

As shown in Figure 3, the MXF file can further be divided into a number of partitions: one Header Partition, optional one or more Body Partitions and optional one Footer Partition. Each Partition (Ptn) may contain Header metadata H as indicated in Figure 4. The Header Partition must contain Header metadata H. Header metadata H are optionally repeated in Body Partitions and the Footer Partition.

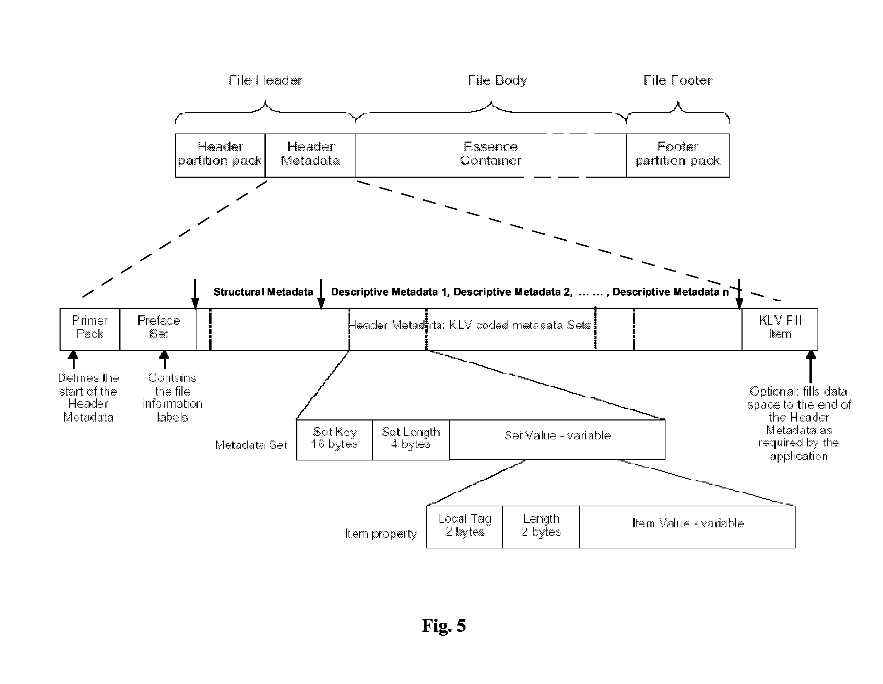

As shown in Figure 5, Header MD (metadata) is split into two categories: Structural MD and Descriptive MD. The Structural MD is defined and set as a single pack, and shall occupy the first part of the Header MD. One or more Descriptive MD is defined as a "plug-in" in the Structural MD pack. There is more than one Descriptive MD block in the Header MD. In the Header MD, the Structural MD and all Descriptive MD are represented as a sequence of KLV (key length value) coded Metadata Sets. Each Metadata Set is a KLV encoded block, which contains further Value Item blocks.

When a local database metadata is converted into MXF metadata, usually it would be converted into one or more Descriptive Metadata, and encoded as KLV Metadata Set blocks of an MXF Header Metadata.

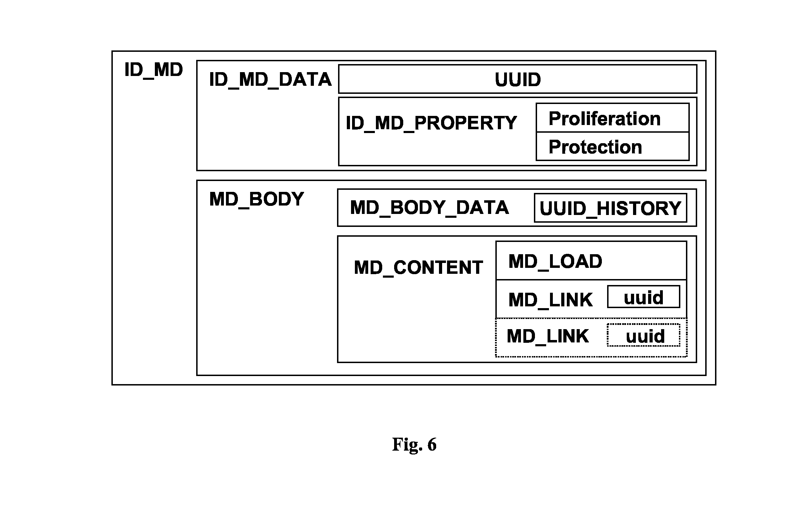

The local data base metadata of the present example shall be represented in the multi-layer-format introduced in EP 1 387 295 A1 as shown in Figure 6. The innermost MD_content contains the MD_load and one or more MD_links with respective UUIDs (Universal Unique Identifier). The next layer MD_Body combines the MD_content with additional MD_Body data like history data. The comparison at this Metadata Body layer is especially suited for checking the identity of any two metadata. In the outermost identifier metadata layer (ID_MD) , the MD_Body is combined with ID_MD_Data, like identifier data or other property data.

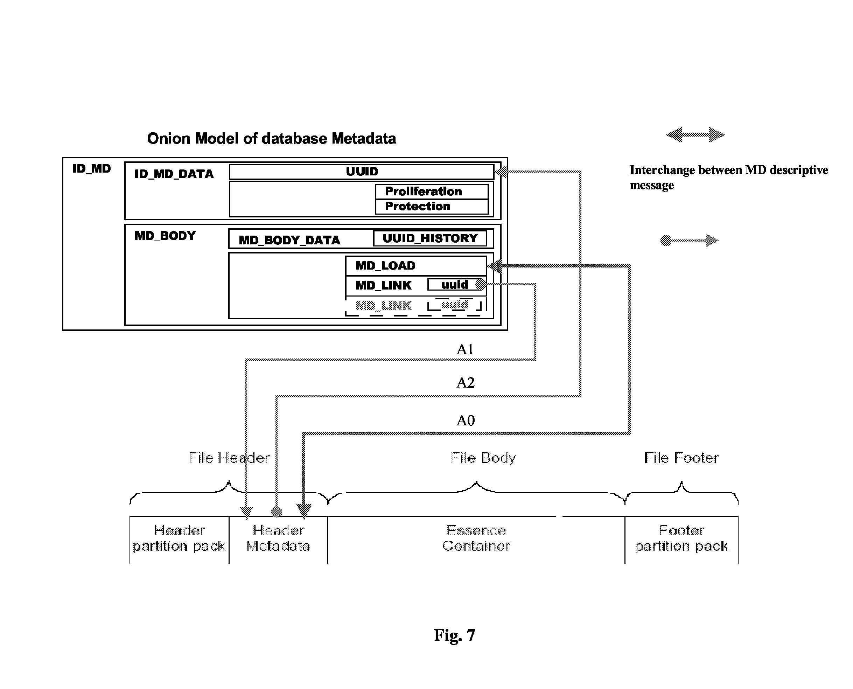

When an MXF metadata set is converted into the database metadata having multi-layer format, the descriptive message will be put in the MD_Load (compare arrow A0 in Figure 7) and all essence linking message (essence UUID) will be put in the MD_Link. In such a way a single MXF metadata set may be converted into multiple database metadata.

The inventive linking of metadata in the multi-layer format with metadata in the MXF format will now be described in connection with Figure 7.

When a database metadata is converted into MXF metadata set(s), or an MXF metadata set is converted into one or more database metadata, associated reference tags are automatically generated and saved in the associated database metadata or MXF metadata set, respectively.

For database metadata in the multi-layer format, the UUID of the MXF file and the UID of the MXF metadata set will be written as a MD_Link into the Multi-layer structure of the database metadata (compare arrow A1 in Figure 7). The UUID of the MXF file acts as an identifier of the MXF file. The UID of the MXF metadata set (compare Figure 5) is used to uniquely identify the associated MXF metadata set in the MXF file. A database metadata may contain multiple (MXF) MD_Links, which point to multiple MXF metadata sets belonging to the same or different MXF files or MXF Header Metadata.

Similarly, for an MXF metadata set, a special reference item, which contains the associated database metadata UUID, will be generated in the metadata set (compare arrow A2). However, such special reference item does not yet exist in the actual MXF specification and should be created, therefore an MXF metadata set might also contain multiple reference items, which point to multiple database metadata.

If e.g. an MXF formatted file that includes MD is stored in a storage device that contains a MD handling device according to the invention, the MD handling device may automatically extract the MD from the MXF and store it in its MD database. If the device has no MD database yet, it may create one. If MD are modified in either the MXF or the database MD, e.g. a textual description relating to a file is changed, then the device may automatically update the mirror MD by copying the modified MD to the mirror MD. Therefore it uses the inventive link data to identify the mirror MD. This update may happen immediately or later, e.g. upon a specified event, like a read access to the file or similar.

In particular, the inventive device may comprise a first data providing means and a second data providing means, wherein both can provide data e.g. from the same harddisk drive (HDD), and the second data providing means retrieves data from a metadata database stored on the HDD. Further, the inventive device comprises means for detecting that first data retrieved from the first data providing means have been modified, the first data having a first format and comprising first metadata, means for extracting link information from the first metadata, wherein the link information is a reference to second metadata being stored in the metadata database, and means for updating the second metadata with the modified first metadata.

In one embodiment of the invention, also the second data contains link information comprising first link information being a reference to said first data and second link information being a reference to said first metadata within said first data, and the device further comprises means for detecting, before updating the retrieved second data, that the retrieved second data have been modified, means for determining whether the first data or the second data have been modified later, means for extracting said link information from the second data if the second data have been modified later, and means for automatically updating the first metadata referenced by said link information.

According to one aspect of the invention, a device for automatically creating metadata includes means for retrieving from a first storage medium first data in first format, the first data comprising first metadata, means for generating link information comprising first link information being a reference to said first data and second link information being a reference to said first metadata within said first data, means for converting the retrieved first metadata to second data in second format different from first format, wherein said generated link information is included in the second data, and means for storing the second data including said link information pointing to the first data and to the first metadata on the first or on a different second storage medium.

## Claims

1. Method for automatically handling metadata including the steps of
- retrieving from a first storage medium first data having a first format, the first data comprising first metadata (H);
- retrieving from the first or a different second storage medium second data (ID_MD) having a second format;
- detecting that the retrieved first data have been modified;
- extracting (A2) link information (UUID) from the first metadata (H), wherein the extracted link information (UUID) is a reference to said second data (ID_MD) ; and
- updating the second data (ID_MD) referenced by said link information (UUID) with the modified first metadata.

2. Method according to claim 1, wherein also the second data (ID_MD) contains link information (uuid) comprising first link information being a reference to said first data and second link information being a reference to said first metadata (H) within said first data, further comprising the steps of
- detecting, before updating the retrieved second data (ID_MD) , that the retrieved second data (ID_MD) have been modified;
- determining whether the first data or the second data (ID_MD) have been modified later, and if the second data (ID_MD) have been modified later, then
- extracting (A1) said link information (uuid) from the second data (ID_MD) ; and
- updating the first metadata (H) referenced by said link information (uuid).

3. Method according to claim 1 or 2, wherein said second format is a multi-layer-format (DB-MD), and said link information (UUID) points to an identifier element in said multi-layer-format.

4. Method according to any of the preceding claims, wherein said second format is a multi-layer-format (DB-MD) providing storage position (MD_LINK) for storing linking information (uuid) pointing to said first metadata, and wherein the first format is MXF and the first metadata are header metadata (H) of an MXF file.

5. Method according to any of the preceding claims, wherein said second format is MXF, and the step of updating the second metadata (ID_MD) comprises modifying a descriptive message (MD_LOAD) and an essence linking message (MD_LINK) .

6. Method for automatically creating metadata by
- retrieving from a first storage medium first data in first format, the first data comprising first metadata (H);
- generating link information (uuid) comprising first link information being a reference to said first data and second link information being a reference to said first metadata (H) within said first data;
- converting the retrieved first metadata (H) to second data (ID_MD) in second format different from first format, wherein said generated link information (uuid) is included in the second data (ID_MD) ; and
- storing the second data (ID_MD) including said link information (uuid) pointing to the first data and to the first metadata (H) on the first or on a different second storage medium.

7. Device for automatically handling metadata including
- first data providing means retrieving first data in first format comprising first metadata from a storage medium;
- second data providing means retrieving second data in second format from a metadata database on a storage medium, wherein both storage media can be the same;
- means for detecting that the first data retrieved from the first data providing means have been modified;
- means for extracting link information from the first metadata; and
- means for updating the second metadata with the modified first metadata.

8. Device according to the previous claim, wherein also the second data (ID_MD) contains link information (uuid) comprising first link information being a reference to said first data and second link information being a reference to said first metadata (H) within said first data, further comprising
- means for detecting, before updating the retrieved second data (ID_MD) , that the retrieved second data (ID_MD) have been modified;
- means for determining whether the first data or the second data (ID_MD) have been modified later;
- means for extracting (A1) said link information (uuid) from the second data (ID_MD) if the second data (ID_MD) have been modified later; and
- means for updating the first metadata (H) referenced by said link information (uuid).

9. Device for automatically creating metadata including
- means for retrieving from a first storage medium first data in first format, the first data comprising first metadata (H);
- means for generating link information (uuid) comprising first link information being a reference to said first data and second link information being a reference to said first metadata (H) within said first data;
- means for converting the retrieved first metadata (H) to second data (ID_MD) in second format different from first format, wherein said generated link information (uuid) is included in the second data (ID_MD) ; and
- means for storing the second data (ID_MD) including said link information (uuid) pointing to the first data and to the first metadata (H) on the first or on a different second storage medium.
